# EUROPÄISCHE PATENTSCHRIFT

(11) **EP 3 423 203 B1**
(45) Veröffentlichungstag und Bekanntmachung des Hinweises auf die Patenterteilung: **26.08.2020**
(21) Anmeldenummer: 17707224.6
(22) Anmeldetag: 22.02.2017
(51) Int. Cl.: B08B 3/00, B08B 3/02, B08B 3/04, B08B 3/10, B01F 3/12, B01F 5/00, B29B 17/02

(54) **VORRICHTUNG UND VERFAHREN ZUM GEMEINSAMEN EINTRAGEN VON KUNSTSTOFFTEILCHEN UND EINER FLÜSSIGKEIT IN EINE REINIGUNGSVORRICHTUNG**
DEVICE AND METHOD FOR THE JOINT FEEDING OF PLASTIC PARTICLES AND A LIQUID INTO A PURIFICATION DEVICE
DISPOSITIF ET PROCÉDÉ POUR L'INTRODUCTION SIMULTANÉE DE PARTICULES DE MATÉRIAU SYNTHÉTIQUE ET D'UN LIQUIDE DANS UN DISPOSITIF DE NETTOYAGE

(30) Priorität: 03.03.2016 DE 102016103781
(43) Veröffentlichungstag der Anmeldung: 09.01.2019
(73) Patentinhaber: CVP Clean Value Plastics GmbH, 20099 Hamburg (DE)
(72) Erfinder: HOFMANN, Michael, 20146 Hamburg (DE); SCHNEIDER, Dirk, 21614 Buxtehude (DE)
(74) Vertreter: Hauck Patentanwaltspartnerschaft mbB
(86) Internationale Anmeldenummer: PCT/EP2017/054006
(87) Internationale Veröffentlichungsnummer: WO 2017/148757

(56) Entgegenhaltungen:
- EP-A2- 1 384 531
- WO-A1-2014/111412
- WO-A2-2013/010654
- DE-A1-102013 111 365

## Beschreibung

Die Erfindung betrifft eine Vorrichtung zum gemeinsamen Eintragen von Kunststoffteilchen und einer Flüssigkeit in eine Reinigungsvorrichtung zum Entfernen von Verunreinigungen von den Kunststoffteilchen. Die Erfindung betrifft außerdem ein Verfahren zum gemeinsamen Eintragen von Kunststoffteilchen und einer Flüssigkeit in eine Reinigungsvorrichtung zum Entfernen von Verunreinigungen von den Kunststoffteilchen.

Reinigungsvorrichtungen zum Entfernen von Verunreinigungen von Kunststoffteilchen, insbesondere von Kunststoffschnipseln (Kunststoffflakes) sind beispielsweise bekannt aus DE 10 2013 111 365 A1,

WO 2013/010654 A2 oder aus WO 2014/111412 A1. Zur Reinigung der Kunststoffteilchen werden diese gemeinsam mit einer Flüssigkeit, meist Wasser, in den Bearbeitungsbereich der Reinigungsvorrichtung eingeleitet.

Als Eintragsverfahren sind im Wesentlichen zwei Varianten bekannt. Zum einen ist es bekannt, die Kunststoffteilchen in einem separaten Behälter in Wasser einzurühren und die Suspension mittels einer Feststoffpumpe durch die Reinigungsvorrichtung zu pumpen. Nachteilig ist dabei, dass ein vergleichsweise großer Rührbehälter mit einem entsprechend aufwendigen Rührwerk benötigt wird. Außerdem muss die hergestellte Suspension pumpfähig sein, so dass eine vergleichsweise große Wassermenge erforderlich ist. Dies wiederum bewirkt einen hohen Energiebedarf in der Reinigungsvorrichtung, da eine große Menge Wasser beschleunigt werden muss. Außerdem ist eine Feststoffpumpe zwischen dem Rührbehälter und der Reinigungsvorrichtung erforderlich. Alternativ ist es bekannt, die Kunststoffteilchen mittels einer Stopfschnecke einzutragen und Wasser zuzugeben, entweder in die Stopfschnecke oder in der Reinigungsvorrichtung. Allerdings zeigt sich in der Praxis, dass derzeit keine zufriedenstellende technische Lösung für den Eintrag von Folienstücken (Kunststoffflakes) in die Reinigungsvorrichtung existiert. Die Schneckeneinträge haben aufgrund der geringen Schüttdichte von Kunststoffflakes und den geometrischen Randbedingungen eine natürliche Leistungsgrenze. Diese Leistungsgrenze liegt unterhalb der möglichen Kapazität der Reinigungsvorrichtungen, so dass diese nicht optimal ausgenutzt werden können. Außerdem sind die kontinuierliche Beschickung der Stopfschnecke mit Kunststoffteilchen und damit die kontinuierliche Beschickung der Reinigungsvorrichtung in der Praxis schwierig.

Ausgehend von dem erläuterten Stand der Technik liegt der Erfindung daher die Aufgabe zugrunde, eine Vorrichtung und ein Verfahren der eingangs genannten Art bereitzustellen, mit denen der Reinigungsvorrichtung in einfacher und energetisch effizienter Weise eine präzise dosierte Mischung aus Kunststoffteilchen und einer Flüssigkeit zugeführt werden kann.

Die Erfindung löst die Aufgabe durch die unabhängigen Ansprüche 1 und 15. Vorteilhafte Ausgestaltungen finden sich in den abhängigen Ansprüchen, der Beschreibung und den Figuren.

Für eine Vorrichtung der eingangs genannten Art löst die Erfindung die Aufgabe durch einen Eintragstrichter, dessen Einlass mit einer Zuführung für die Kunststoffteilchen verbunden ist, und dessen Auslass über eine Zuführleitung mit einem Einlass der Reinigungsvorrichtung verbunden ist, wobei an dem Eintragstrichter mindestens eine mit einer Flüssigkeitsversorgung verbundene Eintragsdüse angeordnet ist, durch die mindestens ein Flüssigkeitsstrahl in den Eintragstrichter ausgebracht wird, wobei die mindestens eine Eintragsdüse derart angeordnet ist, dass es in dem Eintragstrichter zu einer Vermischung der in den Eintragstrichter zugeführten Kunststoffteilchen mit der Flüssigkeit kommt.

Für ein Verfahren der eingangs genannten Art löst die Erfindung die Aufgabe dadurch, dass dem Einlass eines Eintragstrichters Kunststoffteilchen zugeführt werden, wobei durch mindestens eine mit einer Flüssigkeitsversorgung verbundene Eintragsdüse mindestens ein Flüssigkeitsstrahl in den Eintragstrichter ausgebracht wird, so dass es in dem Eintragstrichter zu einer Vermischung der in den Eintragstrichter zugeführten Kunststoffteilchen mit der Flüssigkeit kommt, und wobei die Mischung aus den Kunststoffteilchen und der Flüssigkeit über einen Auslass des Eintragstrichters einem Einlass der Reinigungsvorrichtung zugeführt wird.

Die Kunststoffteilchen werden in der Reinigungsvorrichtung im Zuge eines Recyclingprozesses gereinigt. Es kann sich beispielsweise um zerkleinerte Kunststoffgetränkeflaschen oder andere zerkleinerte Kunststofferzeugnisse handeln. Die Kunststoffteilchen können beispielsweise PET-Kunststoffteilchen sein. Auch andere Materialien sind möglich. In der Reinigungsvorrichtung werden Verunreinigungen von den Kunststoffteilchen entfernt. Bei der Reinigungsvorrichtung kann es sich um einen sogenannten Refiner handeln, in dem die Verunreinigungen von den Kunststoffteilchen abgerieben werden. Der Refiner kann ein Schreibenrefiner mit zwei einander gegenüberliegenden Reinigungsscheiben sein, zwischen denen die Kunststoffteilchen insbesondere durch Friktion gereinigt werden. Es kann sich aber auch um einen Trommel- bzw. Kegelrefiner handeln. Bei den Verunreinigungen handelt es sich insbesondere um Anhaftungen auf den Kunststoffteilchen, wie Zellstoffreste, Klebereste, Etikettenreste oder organische Verschmutzungen. Die Kunststoffteilchen können Kunststoffteilchen geringer Schüttdichte sein, insbesondere Kunststoffschnipsel bzw. flächige Folienstücke (Kunststoffflakes). Die Kunststoffteilchen können aber auch Kunststoffteilchen höherer Schüttdichte sein, beispielsweise Kunststoffkörner, insbesondere körnige Hartkunststoffe.

Die erfindungsgemäße Vorrichtung umfasst einen Eintragstrichter mit einem Einlass, dem die Kunststoffteilchen insbesondere vereinzelt zugeführt werden. An dem Eintragstrichter ist mindestens eine Eintragsdüse vorgesehen. Die mindestens eine Eintragsdüse ist mit einer Flüssigkeitsversorgung verbunden, beispielsweise über eine Pumpe. Über die mindestens eine Eintragsdüse wird die gemeinsam mit den Kunststoffteilchen der Reinigungsvorrichtung zuzuführende Flüssigkeit in den Eintragstrichter geleitet. Die in den Eintragsrichter ausgebrachte Flüssigkeit kann beispielsweise Wasser sein. Entsprechend kann die Flüssigkeitsversorgung eine Wasserversorgung sein. Die Kunststoffteilchen fallen insbesondere schwerkraftbedingt von oben in den Eintragstrichter und werden von der von der mindestens einen Eintragsdüse ausgebrachten Flüssigkeit erfasst. Der Auslass des Eintragstrichters ist beispielsweise über eine Rohrleitung mit einem Einlass der Reinigungsvorrichtung, beispielsweise einem Refiner, verbunden.

Die mindestens eine Eintragsdüse ist erfindungsgemäß so angeordnet, dass es in dem Eintragstrichter zu einer Vermischung der in den Eintragstrichter zugeführten Kunststoffteilchen mit der Flüssigkeit kommt. Durch die erfindungsgemäße gleichmäßige Vermischung der in den Eintragstrichter zugeführten Kunststoffteilchen mit der Flüssigkeit kommt es zu einem optimalen Eintrag der Kunststoffteilchen in die Reinigungsvorrichtung. Im Bereich des Trichterauslasses ist also eine Mischzone gebildet. Dem Einlass der Reinigungsvorrichtung wird folglich eine Suspension aus der Flüssigkeit und den Kunststoffteilchen mit einem weitestgehend konstanten Feststoffanteil zugeführt.

Durch die Erfindung wird in einfacher und energetisch effizienter Weise eine präzise und gleichmäßige Dosierung der Kunststoffteilchen in der Flüssigkeit erreicht. Dabei kann gegenüber dem Stand der Technik der Kunststoffanteil in dem Flüssigkeits-Kunststoff-Gemisch erhöht werden. Denn gerade bei einer hochkonsistenten Betriebsweise führen Schwankungen der Dosierung sehr schnell zu Verstopfungen und damit zu Betriebsunterbrechungen. Aufgrund der erfindungsgemäßen zuverlässig präzisen Einstellung des Feststoffanteils kann dies vermieden werden. Durch die mindestens eine Eintragsdüse wird eine genaue und zielgerichtete Zugabe der Flüssigkeit in den Eintragstrichter ermöglicht. Die Flüssigkeitszugabe wird dadurch optimiert, gegebenenfalls unter Ausnutzung der kinetischen Energie der Flüssigkeit. Es wird eine betriebssichere Mischzone von Flüssigkeit und Kunststoffteilchen ausgebildet, die auch für höhere Leistungen ausgelegt ist. Die Mischzone kann besonders dicht am Einlass der Reinigungsvorrichtung liegen, lediglich beabstandet durch die Verbindungsleitung zwischen dem Trichterauslass und dem Einlass der Reinigungsvorrichtung. Außerdem ist die Erfindung universell einsetzbar, also unter anderem auch für (körnige) Hartkunststoffe.

Indem der Kunststoffanteil, wie erläutert, gegenüber dem Stand der Technik erhöht werden kann, wird der Flüssigkeitsverbrauch im Verhältnis abgesenkt. Es muss somit weniger Flüssigkeit nach dem Reinigungsprozess wieder aufbereitet werden. Die Energieeffizienz ist verbessert. Außerdem wird die Durchsatzleistung bei unterproportional steigendem Energiebedarf erhöht. Die Betriebssicherheit wird ebenfalls erhöht.

Die mindestens eine Eintragsdüse kann anch einer Ausgestaltung derart angeordnet sein, dass sich im Bereich des Auslasses des Eintragstrichters ein die in den Eintragstrichter zugeführten Kunststoffteilchen mit der Flüssigkeit vermischender Strudel ausbildet. Indem im Bereich des Trichterauslasses ein Flüssigkeitsstrudel bzw. Flüssigkeitswirbel ausgebildet wird, wird die gleichmäßige Vermischung der Kunststoffteilchen mit der zugeführten Flüssigkeit weiter optimiert. Die Dosierung der Kunststoffteilchen kann dadurch weiter vergleichmäßigt werden und die Effizienz und Betriebssicherheit der Erfindung weiter erhöht werden.

Nach einer weiteren besonders praxisgemäßen Ausgestaltung kann der von der mindestens einen Eintragsdüse ausgebrachte Flüssigkeitsstrahl auf die Innenwand des Eintragstrichters gerichtet sein, vorzugsweise unter einem Winkel gegenüber der Axialrichtung des Eintragstrichters. Auf diese Weise kann ein Strudel im Trichterauslass in besonders einfacher Weise erzeugt werden. Die Axialrichtung des Trichters ist dabei durch die zwischen dem Trichtereinlass und dem Trichterauslass verlaufende Mittelachse gebildet. Der Winkel des Flüssigkeitsstrahls gegenüber dieser Axialrichtung kann insbesondere größer als 45° sein. Er kann beispielsweise im Bereich von 50° bis 80°, vorzugsweise im Bereich von 60° bis 70° liegen.

Mindestens eine Eintragsdüse kann nach einer weiteren Ausgestaltung am Rand des Einlasses des Eintragstrichters angeordnet sein. Die mindestens eine Eintragsdüse kann dabei die Wand des Eintragstrichters im Bereich des Öffnungsrands des Eintragstrichters durchtreten, so dass eine von der Flüssigkeitsversorgung kommende Versorgungsleitung von außen an die mindestens eine Eintragsdüse angeschlossen werden kann.

Die Ausrichtung der mindestens einen Eintragsdüse kann nach einer weiteren Ausgestaltung justierbar sein, zum Beispiel manuell oder gesteuert durch eine Justiereinrichtung. Dadurch kann die Erfindung an unterschiedliche Betriebssituationen angepasst werden.

Nach einer weiteren Ausgestaltung können an dem Eintragstrichter mehrere mit einer Flüssigkeitsversorgung verbundene Eintragsdüsen angeordnet sein, über die die Flüssigkeit in den Eintragstrichter zugeführt wird. Die mehreren Eintragsdüsen können dann wiederum derart angeordnet sein, dass sich im Bereich des Auslasses des Trichters ein die Kunststoffteilchen mit der Flüssigkeit vermischender Strudel bildet. Es können dann entsprechend die von den mehreren Eintragsdüsen ausgebrachten Flüssigkeitsstrahle auf die Innenwand des Eintragstrichters gerichtet sein, beispielsweise unter einem Winkel gegenüber der Axialrichtung des Eintragstrichters, wie oben erläutert, insbesondere unter demselben Winkel gegenüber der Axialrichtung des Eintragstrichters. Die von den Eintragsdüsen ausgebrachten Flüssigkeitsstrahle können außerdem parallel oder unter einem (insbesondere demselben) geringen Winkel (beispielsweise weniger als 20°, vorzugsweise weniger als 10°) zu einer im Bereich der Befestigung der Eintragsdüsen jeweils an den Öffnungsrand des Trichtereinlasses angelegten Tangente gerichtet sein. Die von den Eintragsdüsen ausgebrachte Flüssigkeit läuft dann wendelförmig an der Innenwand des Eintragstrichters herab zum Auslass und bildet dort einen Strudel. Ebenso können die mehreren Eintragsdüsen am Rand des Trichtereinlasses angeordnet sein. Auch kann die Position der mehreren Eintragsdüsen justierbar sein. Die erfindungsgemäß erforderliche Anzahl an Eintragsdüsen hängt von dem jeweiligen Anwendungsfall ab. Grundsätzlich ist es denkbar, nur eine Eintragsdüse einzusetzen. In der Praxis werden allerdings voraussichtlich mehrere Eintragsdüsen sinnvoll seien, beispielsweise mindestens vier oder mehr als vier Eintragsdüsen.

An dem Eintragstrichter kann weiterhin mindestens eine Eintragsdüse angeordnet sein, durch die ein direkt in den Auslass des Eintragstrichters gerichteter Flüssigkeitsstrahl ausgebracht wird. Wiederum können mehrere solcher Eintragsdüsen vorgesehen sein. Die mindestens eine Eintragsdüse wirkt dann als mindestens eine Spüldüse. Sie kann beispielsweise lotrecht über dem Auslass des Eintragstrichters angeordnet sein, so dass der ausgebrachte Flüssigkeitsstrahl in Axialrichtung des Eintragstrichters in den Trichterauslass gerichtet ist. Auf diese Weise kann unter Ausnutzung der kinetischen Energie der Flüssigkeit eine Beschleunigung der Suspension in Richtung des Einlasses der Reinigungsvorrichtung bewirkt werden. Die von der oder den Eintragsdüsen direkt in den Trichterauslass ausgebrachte Flüssigkeit führt die Kunststoffteilchen dann in den Trichterauslass. Dabei kann eine ausreichende Vermischung der Kunststoffteilchen mit der Flüssigkeit gegebenenfalls auch ohne Ausbilden eines Strudels im Bereich der Mischzone erreicht werden. Weiter unterstützt wird dies, wenn durch die nachfolgende Reinigungsvorrichtung ein Ansaugen der in dem Eintragstrichter erzeugten Suspension erfolgt, beispielsweise indem die Pumpwirkung der durch die Reinigungsvorrichtung gepumpten Suspension einen Unterdruck bzw. Sog am Auslass des Eintragstrichters erzeugt. Außerdem können auf diese Weise etwaige Verstopfungen im Bereich des Trichterauslasses aufgelöst werden. Auch die mindestens eine Spüldüse ist mit der Flüssigkeitsversorgung verbunden, beispielsweise über eine Pumpe. Natürlich ist auch eine Kombination von auf die Innenwand des Eintragstrichters und in den Trichterauslass gerichteten Eintragsdüsen möglich.

Zumindest der Rand des Einlasses des Eintragstrichters kann nach einer weiteren Ausgestaltung ellipsenförmig sein. Auch der Trichter selbst kann sich ellipsenförmig verjüngend ausgebildet sein. Auf diese Weise wird eine besonders effektive Strudelbildung erreicht. Es sind aber auch andere Trichterformen denkbar, beispielsweise ein sich kreisförmig verjüngender Querschnitt, insbesondere wenn der Abstand zwischen dem Trichterauslass und dem Einlass der Reinigungsvorrichtung größer ist.

Nach einer weiteren Ausgestaltung kann vorgesehen sein, dass die Zuführung für die Kunststoffteilchen ein mit dem Einlass des Eintragstrichters verbundenes und die Kunststoffteilchen enthaltendes Zuführreservoir umfasst, wobei in dem Zuführreservoir drehend angetriebene Zuführbürsten angeordnet sind, durch die die Kunststoffteilchen dem Einlass des Eintragstrichters vereinzelt zugeführt werden. Durch die beispielsweise um parallele Drehachsen drehend angetriebenen beispielsweise zwei Zuführbüsten werden die in dem beispielsweise ebenfalls trichterförmigen Zuführreservoir befindlichen Kunststoffteilchen dem Eintragstrichter hochgenau vereinzelt und präzise dosiert zugeführt, insbesondere vorhangartig zugeführt. Dadurch kann der Durchsatz des Eintragstrichters auch bei hoher Feststoffkonsistenz zuverlässig weiter erhöht werden.

Es kann weiterhin eine Steuereinrichtung vorgesehen sein, die die Zuführung für die Kunststoffteilchen und/oder die Flüssigkeitsversorgung ansteuert. Die für den erfindungsgemäßen Eintrag erforderliche Flüssigkeitsmenge hängt unter anderem von dem Auslass der Reinigungsvorrichtung ab. Wenn in der Reinigungsvorrichtung eine Pumpwirkung für eine verbesserte Reinigung der Kunststoffteilchen erzielt werden soll und sich am Auslass der Reinigungsvorrichtung eine Pumpe befindet, muss eine entsprechend größere Menge Flüssigkeit eingedüst werden, um eine pumpfähige Suspension zu erzeugen. Wird dagegen die Suspension frei aus dem Auslass der Reinigungsvorrichtung ausgetragen, also ohne Pumpe, kann eine entsprechend geringere Flüssigkeitsmenge eingestellt werden, so dass der Ressourcen- und Energieaufwand optimiert werden kann. In Kombination mit einem Strahlpumpenrefiner kann die Flüssigkeitsmenge auf die Reinigung in der Reinigungsvorrichtung optimiert werden (mit minimalem Energieaufwand) und anschließend in der Reinigungsvorrichtung eine erforderliche Flüssigkeitsmenge zum Transport zugegeben werden. Durch die Steuereinrichtung kann die der Reinigungsvorrichtung zugeführte Feststoffkonsistenz jeweils in der gewünschten Weise eingestellt werden.

Es kann weiterhin eine Regeleinrichtung vorgesehen sein, die auf Grundlage von von mindestens einer Messvorrichtung bereitgestellten Messdaten die Zuführung für die Kunststoffteilchen und/oder die Flüssigkeitsversorgung ansteuert. Die Messvorrichtung kann beispielsweise einen den Füllstand im Auslass des Eintragstrichters messenden Füllstandssensor umfassen. Bei dieser Ausgestaltung kann in Abhängigkeit von relevanten Messdaten, beispielsweise dem Füllstand im Bereich des Trichterauslasses, die Zufuhr der Kunststoffteilchen und/oder der Flüssigkeit in der erforderlichen Weise angesteuert werden. So kann beispielsweise auf einen Sollfüllstand im Trichterauslass geregelt werden, der jederzeit einen sicheren und zuverlässigen Betrieb der erfindungsgemäßen Vorrichtung gewährleistet.

Die Erfindung betrifft außerdem eine Reinigungsvorrichtung zum Entfernen von Verunreinigungen von Kunststoffteilchen mit einem Einlass zum gemeinsamen Eintragen von Kunststoffteilchen und einer Flüssigkeit, umfassend eine erfindungsgemäße Vorrichtung. Die Reinigungsvorrichtung kann beispielsweise ausgestaltet sein wie beschrieben in WO 2013/010654 A2 oder WO 2014/111412 A1.

Das erfindungsgemäße Verfahren kann mit der erfindungsgemäßen Vorrichtung durchgeführt werden.

Ein Ausführungsbeispiel der Erfindung wird nachfolgend anhand von Figuren näher erläutert. Es zeigen schematisch:
- Fig. 1: eine Reinigungsvorrichtung zum Entfernen von Verunreinigungen von Kunststoffteilchen mit einer erfindungsgemäßen Vorrichtung zum gemeinsamen Eintragen von Kunststoffteilchen und einer Flüssigkeit in einer Schnittansicht,
- Fig. 2: den Eintragstrichter der in Fig. 1 gezeigten Vorrichtung in einer perspektivischen Ansicht,
- Fig. 3: den Eintragstrichter aus Fig. 2 in einer ersten Seitenansicht,
- Fig. 4: den Eintragstrichter aus Fig. 2 in einer zweiten Seitenansicht, und
- Fig. 5: den Eintragstrichter aus Fig. 2 in einer Draufsicht.

Soweit nichts anderes angegeben ist, bezeichnen in den Figuren gleiche Bezugszeichen gleiche Gegenstände.

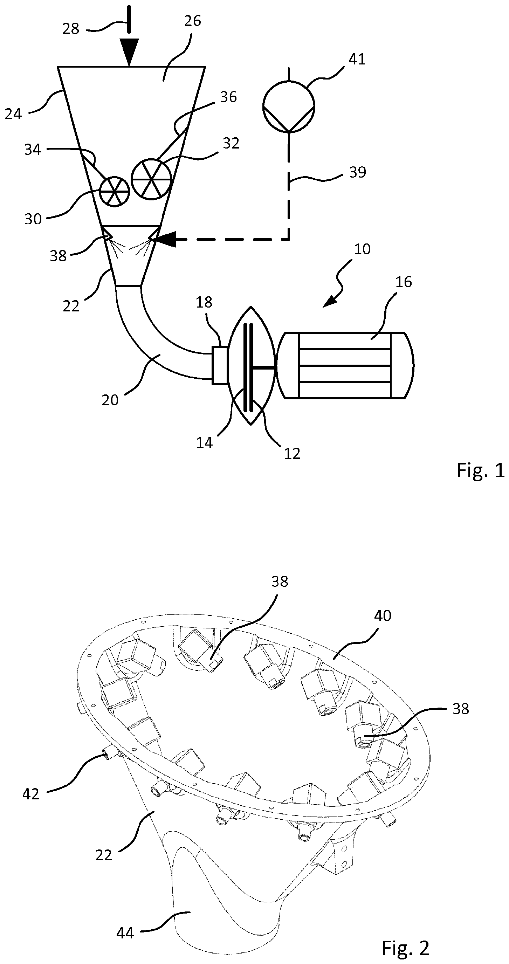

In Fig. 1 ist bei dem Bezugszeichen 10 eine Reinigungsvorrichtung zum Entfernen von Verunreinigungen von Kunststoffteilchen, beispielsweise von Kunststoffflakes, gezeigt. In dem gezeigten Beispiel handelt es sich bei der Reinigungsvorrichtung um einen Scheibenrefiner, dessen Reinigungsscheiben bei den Bezugszeichen 12 und 14 dargestellt sind. Über einen Motor 16 wird zumindest eine der Reinigungsscheiben 12, 14 drehend angetrieben. Eine solche Vorrichtung ist an sich bekannt und kann beispielsweise ausgestaltet sein, wie in WO 2013/010654 A2 gezeigt. Obgleich in Fig. 1 ein Scheibenrefiner dargestellt ist, sind auch andere Reinigungsvorrichtungen möglich, beispielsweise ein Trommel- bzw. Kegelrefiner.

An einen Einlass 18 der Reinigungsvorrichtung 10 ist eine Rohrleitung 20 angeschlossen, die mit dem Auslass eines Eintragstrichters 22 verbunden ist. Über dem Einlass des Eintragstrichters 22 ist ein Zuführtrichter 24 angeordnet, der ein Zuführreservoir 26 bildet, in den zu reinigende Kunststoffteilchen eingefüllt werden, wie bei dem Pfeil 28 veranschaulicht. In dem Zuführtrichter 24 befinden sich in dem dargestellten Beispiel zwei unterschiedlich große, um parallele Drehachsen drehend angetriebene Zuführbürsten 30, 32. Über Leitwände 34, 36 werden die Kunststoffteilchen schwerkraftbedingt aus dem Zuführreservoir 26 den Zuführbürsten 30, 32 zugeführt und zwischen diesen hindurch in den Einlass des Eintragstrichters 22 geleitet. Dabei werden die Kunststoffteilchen vereinzelt und fallen vorhangförmig gleichmäßig in den Eintragstrichter 22. In dem Eintragstrichter 22 sind mehrere Eintragsdüsen 38 angeordnet, wie anhand der Figuren 2 bis 5 noch näher erläutert werden wird. Die Eintragsdüsen 38 sind über eine Versorgungsleitung 39 und eine Pumpe 41 mit einer nicht näher dargestellten Flüssigkeitsversorgung, vorliegend einer Wasserversorgung verbunden. Über diese Wasserversorgung zugeführtes Wasser wird von den Eintragsdüsen 38 in den Eintragstrichter 22 ausgebracht.

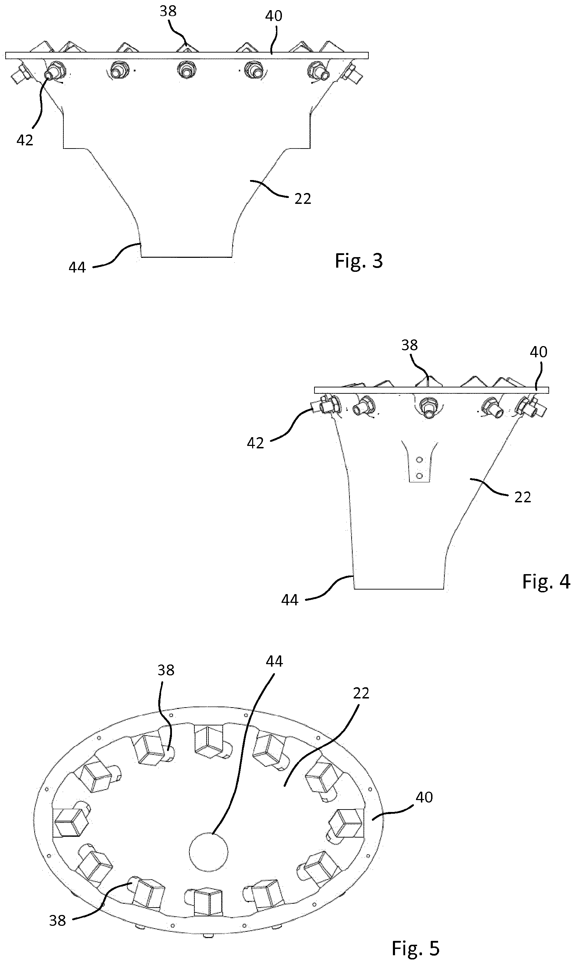

Wie insbesondere in den Figuren 2 bis 5 zu erkennen, sind die Eintragsdüsen 38 in regelmäßigen Abständen verteilt am Rand 40 des Einlasses des Eintragstrichters 22 angeordnet. Dabei ragt jeweils ein Flüssigkeitsanschluss 42 der Eintragsdüsen 38 durch die Wand des Eintragstrichters 22 hindurch nach außen. An diese Flüssigkeitsanschlüsse 42 wird die Versorgungsleitung 39 angeschlossen. Der von den Eintragsdüsen 38 jeweils ausgebrachte Flüssigkeitsstrahl ist auf die Innenwand des Eintragstrichters 22 gerichtet, vorliegend unter einem Winkel gegenüber der Axialrichtung des Eintragstrichters, die beispielsweise in Fig. 3 vertikal von oben nach unten verläuft. Der Winkel kann beispielsweise im Bereich von 60° bis 70° zu der Axialrichtung liegen. Außerdem sind die von den Eintragsdüsen 38 ausgebrachten Flüssigkeitsstrahle jeweils unter einem geringen Winkel, beispielsweise weniger als 20°, zu einer im Bereich der Befestigung der Eintragsdüsen 38 an dem Öffnungsrand 40 des Trichtereinlasses angelegten gedachten Tangente gerichtet. Durch diese Anordnung der Eintragsdüsen 28 läuft das eingestrahlte Wasser spiralförmig an der Innenwand des Eintragstrichters 22 herab zu dem Auslass 44 des Eintragstrichters 22 und es kommt im Bereich des Auslasses 44 zu einer Verwirbelung bzw. einem Strudel des eingestrahlten Wassers. Dies wiederum führt zum Ausbilden einer Mischzone im Bereich des Auslasses 44, in der die durch Schwerkraft über die Zuführbürsten 30, 32 in den Eintragstrichter 22 fallenden Kunststoffteilchen homogen und mit präzise definiertem Feststoffanteil mit dem Wasser vermischt werden. Die so gebildete Suspension aus Wasser und Kunststoffteilchen wird über die Zuführleitung 20 dem Einlass 18 der Reinigungsvorrichtung 10 zugeführt und die Kunststoffteilchen werden in der Reinigungsvorrichtung 10 von Verunreinigungen befreit. Insbesondere in den Figuren 2 und 5 ist außerdem zu erkennen, dass der Rand 40 des Einlasses des Eintragstrichters 22 ellipsenförmig ausgebildet ist.

Obwohl in den Figuren nicht dargestellt, kann an dem Eintragstrichter 22 alternativ oder zusätzlich zu den gezeigten Eintragsdüsen 38 weiterhin mindestens eine Spüldüse angeordnet, durch die ein direkt in den Auslass 44 des Eintragstrichters 22 gerichteter Flüssigkeitsstrahl ausgebracht wird. Auch kann die erfindungsgemäße Vorrichtung eine Regeleinrichtung umfassen, die auf Grundlage von Messdaten einer Messvorrichtung die Zuführung für die Kunststoffteilchen, insbesondere die Drehgeschwindigkeit der Zuführbürsten 30, 32 und/oder die Zufuhr der Flüssigkeit, insbesondere die Pumpe 41, ansteuert. Die Messvorrichtung kann beispielsweise den Füllstand im Auslass 44 des Eintragstrichters 22 messen.

### Bezugszeichenliste

- 10: Reinigungsvorrichtung
- 12: Reinigungs scheibe
- 14: Reinigungsscheibe
- 16: Motor
- 18: Einlass
- 20: Rohrleitung
- 22: Eintragstrichter
- 24: Zuführtrichter
- 26: Zuführreservoir
- 28: Pfeil
- 30: Zuführbürste
- 32: Zuführbürste
- 34: Leitwand
- 36: Leitwand
- 38: Eintragsdüse
- 39: Versorgungsleitung
- 40: Rand
- 41: Pumpe
- 42: Flüssigkeitsanschluss
- 44: Auslass

## Patentansprüche

1. Vorrichtung zum gemeinsamen Eintragen von Kunststoffteilchen und einer Flüssigkeit in eine Reinigungsvorrichtung (10) zum Entfernen von Verunreinigungen von den Kunststoffteilchen, **gekennzeichnet durch** einen Eintragstrichter (22), dessen Einlass mit einer Zuführung für die Kunststoffteilchen verbunden ist, und dessen Auslass (44) über eine Zuführleitung mit einem Einlass (18) der Reinigungsvorrichtung (10) verbunden ist, wobei an dem Eintragstrichter (22) mindestens eine mit einer Flüssigkeitsversorgung verbundene Eintragsdüse (38) angeordnet ist, durch die mindestens ein Flüssigkeitsstrahl in den Eintragstrichter (22) ausgebracht wird, wobei die mindestens eine Eintragsdüse (38) derart angeordnet ist, dass es in dem Eintragstrichter (22) zu einer Vermischung der in den Eintragstrichter (22) zugeführten Kunststoffteilchen mit der Flüssigkeit kommt.

2. Vorrichtung nach Anspruch 1, **dadurch gekennzeichnet, dass** die mindestens eine Eintragsdüse (38) derart angeordnet ist, dass sich im Bereich des Auslasses (44) des Eintragstrichters (22) ein die in den Eintragstrichter (22) zugeführten Kunststoffteilchen mit der Flüssigkeit vermischender Strudel ausbildet.

3. Vorrichtung nach einem der Ansprüche 1 oder 2, **dadurch gekennzeichnet, dass** der von der mindestens einen Eintragsdüse (38) ausgebrachte Flüssigkeitsstrahl auf die Innenwand des Eintragstrichters (22) gerichtet ist, vorzugsweise unter einem Winkel gegenüber der Axialrichtung des Eintragstrichters (22).

4. Vorrichtung nach einem der vorhergehenden Ansprüche, **dadurch gekennzeichnet, dass** mindestens eine Eintragsdüse (38) am Rand (40) des Einlasses des Eintragstrichters (22) angeordnet ist.

5. Vorrichtung nach einem der vorhergehenden Ansprüche, **dadurch gekennzeichnet, dass** die Ausrichtung der mindestens einen Eintragsdüse (38) justierbar ist.

6. Vorrichtung nach einem der vorhergehenden Ansprüche, **dadurch gekennzeichnet, dass** an dem Eintragstrichter (22) mehrere mit einer Flüssigkeitsversorgung verbundene Eintragsdüsen (38) angeordnet sind, über die die Flüssigkeit in den Eintragstrichter (22) zugeführt wird.

7. Vorrichtung nach einem der vorhergehenden Ansprüche, **dadurch gekennzeichnet, dass** durch mindestens eine Eintragsdüse ein direkt in den Auslass (44) des Eintragstrichters (22) gerichteter Flüssigkeitsstrahl ausgebracht wird.

8. Vorrichtung nach einem der vorhergehenden Ansprüche, **dadurch gekennzeichnet, dass** zumindest der Rand (40) des Einlasses (18) des Eintragstrichters ellipsenförmig ist.

9. Vorrichtung nach einem der vorhergehenden Ansprüche, **dadurch gekennzeichnet, dass** die Zuführung für die Kunststoffteilchen ein mit dem Einlass des Eintragstrichters (22) verbundenes und die Kunststoffteilchen enthaltendes Zuführreservoir (26) umfasst, wobei in dem Zuführreservoir (26) drehend angetriebene Zuführbürsten (30, 32) angeordnet sind, durch die die Kunststoffteilchen dem Einlass des Eintragstrichters (22) vereinzelt zugeführt werden.

10. Vorrichtung nach einem der vorhergehenden Ansprüche, **dadurch gekennzeichnet, dass** sie weiterhin eine Steuereinrichtung umfasst zum Ansteuern der Zuführung für die Kunststoffteilchen und/oder der Flüssigkeitsversorgung.

11. Vorrichtung nach einem der vorhergehenden Ansprüche, **dadurch gekennzeichnet, dass** sie weiterhin eine Regeleinrichtung umfasst, die auf Grundlage von von mindestens einer Messvorrichtung bereitgestellten Messdaten die Zuführung für die Kunststoffteilchen und/oder der Flüssigkeitsversorgung ansteuert.

12. Vorrichtung nach Anspruch 11, **dadurch gekennzeichnet, dass** die Messvorrichtung einen den Füllstand im Auslass (44) des Eintragstrichters (22) messenden Füllstandssensor umfasst.

13. Reinigungsvorrichtung (10) zum Entfernen von Verunreinigungen von Kunststoffteilchen mit einem Einlass (18) zum gemeinsamen Eintragen von Kunststoffteilchen und einer Flüssigkeit, umfassend eine Vorrichtung nach einem der vorhergehenden Ansprüche.

14. Reinigungsvorrichtung (10) nach Anspruch 13, **dadurch gekennzeichnet, dass** die Reinigungsvorrichtung (10) ein Refiner, insbesondere ein Scheibenrefiner oder ein Trommel- bzw. Kegelrefiner ist.

15. Verfahren zum gemeinsamen Eintragen von Kunststoffteilchen und einer Flüssigkeit in eine Reinigungsvorrichtung (10) zum Entfernen von Verunreinigungen von den Kunststoffteilchen, wobei dem Einlass eines Eintragstrichters (22) Kunststoffteilchen zugeführt werden, wobei durch mindestens eine mit einer Flüssigkeitsversorgung verbundene Eintragsdüse (38) mindestens ein Flüssigkeitsstrahl in den Eintragstrichter (22) ausgebracht wird, so dass es in dem Eintragstrichter (22) zu einer Vermischung der in den Eintragstrichter (22) zugeführten Kunststoffteilchen mit der Flüssigkeit kommt, und wobei die Mischung aus den Kunststoffteilchen und der Flüssigkeit über einen Auslass (44) des Eintragstrichters (22) einem Einlass (18) der Reinigungsvorrichtung (10) zugeführt wird.

16. Verfahren nach Anspruch 15, **dadurch gekennzeichnet, dass** durch die mindestens eine Eintragsdüse (38) mindestens ein Flüssigkeitsstrahl in den Eintragstrichter (22) derart ausgebracht wird, dass sich im Bereich des Auslasses (44) des Eintragstrichters (22) ein die dem Eintragstrichter (22) zugeführten Kunststoffteilchen mit der Flüssigkeit vermischender Strudel ausbildet.

17. Verfahren nach einem der Ansprüche 15 oder 16, **dadurch gekennzeichnet, dass** von der mindestens einen Eintragsdüse (38) ein auf die Innenwand des Eintragstrichters (22) gerichteter Flüssigkeitsstrahl ausgebracht wird, vorzugsweise unter einem Winkel gegenüber der Axialrichtung des Eintragstrichters (22).

18. Verfahren nach einem der Ansprüche 15 bis 17, **dadurch gekennzeichnet, dass** durch mehrere mit einer Flüssigkeitsversorgung verbundene Eintragsdüsen (38) jeweils ein Flüssigkeitsstrahl in den Eintragstrichter (22) ausgebracht wird.

19. Verfahren nach einem der Ansprüche 15 bis 18, **dadurch gekennzeichnet, dass** durch mindestens eine Eintragsdüse ein direkt in den Auslass (44) des Eintragstrichters (22) gerichteter Flüssigkeitsstrahl ausgebracht wird.

20. Verfahren nach einem der Ansprüche 15 bis 19, **dadurch gekennzeichnet, dass** die Kunststoffteilchen aus einem mit dem Einlass des Eintragstrichters (22) verbundenen und die Kunststoffteilchen enthaltenden Zuführreservoir (26) in den Eintragstrichter (22) zugeführt werden, wobei in dem Zuführreservoir (26) drehend angetriebene Zuführbürsten (30, 32) angeordnet sind, durch die die Kunststoffteilchen dem Einlass des Eintragstrichters (22) vereinzelt zugeführt werden.

21. Verfahren nach einem der Ansprüche 15 bis 20, **dadurch gekennzeichnet, dass** die Zuführung für die Kunststoffteilchen und/oder die Flüssigkeitsversorgung der mindestens einen Eintragsdüse (38) auf Grundlage von von mindestens einer Messvorrichtung bereitgestellten Messdaten gesteuert wird.

22. Verfahren nach Anspruch 21, **dadurch gekennzeichnet, dass** die Messvorrichtung den Füllstand im Auslass (44) des Eintragstrichters (22) misst.

23. Verfahren nach einem der Ansprüche 15 bis 22, **dadurch gekennzeichnet, dass** es mit einer Vorrichtung nach einem der Ansprüche 1 bis 14 durchgeführt wird.

## Claims

1. A device for jointly delivering plastic particles and a liquid to a cleaning device (10) to remove impurities from the plastic particles, **characterized by** a delivery funnel (22) whose inlet is connected to a supply for the plastic particles, and whose outlet (44) is connected via a supply line to an inlet (18) of the cleaning device (10), wherein at least one delivery nozzle (38) connected to a liquid supply is arranged on the delivery funnel (22) and through which at least one liquid jet is discharged into the delivery funnel (22), wherein the at least one delivery nozzle (38) is arranged such that a mixture occurs in the delivery funnel (22) of the plastic particles supplied to the delivery funnel (22) with the liquid.

2. The device according to claim 1, **characterized in that** the at least one delivery nozzle (38) can be arranged such that a swirl that mixes the plastic particles supplied to the delivery funnel (22) with the liquid is formed in the region of the outlet (44) of the delivery funnel (22).

3. The device according to one of claims 1 or 2, **characterized in that** the liquid jet discharged by the at least one delivery nozzle (38) is directed toward the inner wall of the delivery funnel (22), preferably at an angle relative to the axial direction of the delivery funnel (22).

4. The device according to one of the preceding claims, **characterized in that** at least one delivery nozzle (38) is arranged on the edge (40) of the inlet of the delivery funnel (22).

5. The device according to one of the preceding claims, **characterized in that** the alignment of the at least one delivery nozzle (38) is adjustable.

6. The device according to one of the preceding claims, **characterized in that** a plurality of delivery nozzles (38) connected to a liquid supply is arranged on the delivery funnel (22), through which the liquid is supplied to the delivery funnel (22).

7. The device according to one of the preceding claims, **characterized in that** a directed liquid jet is discharged by at least one delivery nozzle directly into the outlet (44) of the delivery funnel (22).

8. The device according to one of the preceding claims, **characterized in that** at least the edge (40) of the inlet (18) of the delivery funnel is elliptical.

9. The device according to one of the preceding claims, **characterized in that** the supply for the plastic particles comprises a supply reservoir (26) connected to the inlet of the delivery funnel (22) and containing the plastic particles, wherein rotatably driven supply brushes (30, 32) are arranged in the supply reservoir (26) by which the plastic particles are separately supplied to the inlet of the delivery funnel (22).

10. The device according to one of the preceding claims, **characterized in that** it moreover comprises a control apparatus for controlling the supply for the plastic particles and/or the liquid supply.

11. The device according to one of the preceding claims, **characterized in that** it moreover comprises a regulating apparatus that controls the supply for the plastic particles and/or the liquid supply on the basis of measured data provided by at least one measuring device.

12. The device according to claim 11, **characterized in that** the measuring device comprises a fill level sensor that measures the fill level in the outlet (44) of the delivery funnel (22).

13. A cleaning device (10) for removing impurities from plastic particles having an inlet (18) for jointly delivering plastic particles and a liquid, comprising a device according to one of the preceding claims.

14. The cleaning device (10) according to claim 13, **characterized in that** the cleaning device (10) is a refiner, in particular a disk refiner or a drum, or respectively ball refiner.

15. The method for jointly delivering plastic particles and a liquid into a cleaning device (10) for removing impurities from the plastic particles, wherein plastic particles are supplied to the inlet of a delivery nozzle (22), wherein by means of at least one delivery nozzle (38) connected to a liquid supply, at least one liquid jet is discharged into the delivery funnel (22) such that a mixture occurs in the delivery funnel (22) of the plastic particles supplied to the delivery funnel (22) with the liquid, and wherein the mixture of the plastic particles and the liquid is supplied via an outlet (44) of the delivery funnel (22) to an inlet (18) of the cleaning device (10).

16. The method according to claim 15, **characterized in that** at least one liquid jet is discharged into the delivery funnel (22) by the at least one delivery nozzle (38) such that a swirl that mixes the plastic particles supplied to the delivery funnel (22) with the liquid is formed in the region of the outlet (44) of the delivery funnel (22).

17. The method according to one of claims 15 or 16, **characterized in that** a directed liquid jet directed toward the inner wall of the delivery funnel (22) is discharged by the at least one delivery nozzle (38), preferably at an angle relative to the axial direction of the delivery funnel (22).

18. The method according to one of claims 15 to 17, **characterized in that** a liquid jet is discharged into the delivery funnel (22) by a plurality of discharge nozzles (38) connected to a liquid supply.

19. The method according to one of the claims 15 to 18, **characterized in that** a directed liquid jet is discharged by at least one delivery nozzle directly into the outlet (44) of the delivery funnel (22).

20. The method according to one of claims 15 to 19, **characterized in that** the plastic particles are supplied to the delivery funnel (22) from a supply reservoir (26) connected to the inlet of the delivery funnel (22) and containing the plastic particles, wherein rotatably driven supply brushes (30, 32) are arranged in the supply reservoir (26) by which the plastic particles are separately supplied to the inlet of the delivery funnel (22).

21. The method according to one of claims 15 to 20, **characterized in that** the supply for the plastic particles and/or the liquid supply of the at least one delivery nozzle (38) is controlled on the basis of measured data provided by at least one measuring device.

22. The method according to claim 21, **characterized in that** the measuring device that measures the fill level in the outlet (44) of the delivery funnel (22).

23. The method according to one of claims 15 to 22, **characterized in that** it is performed by means of a device according to one of claims 1 to 14.

## Revendications

1. Dispositif pour l'introduction conjointe de particules de matière plastique et d'un liquide dans un dispositif de nettoyage (10) destiné à éliminer des impuretés des particules de matière plastique, **caractérisé par** un entonnoir d'introduction (22) dont l'entrée est reliée à une alimentation pour les particules de matière plastique et dont la sortie (44) est reliée à une entrée (18) du dispositif de nettoyage (10) par le biais d'une conduite d'alimentation, dans lequel au moins une buse d'introduction (38) reliée à une arrivée de liquide est disposée sur l'entonnoir d'introduction (22), à travers laquelle au moins un jet de liquide est distribué dans l'entonnoir d'introduction (22), dans lequel l'au moins une buse d'introduction (38) est conçue de manière à produire un mélange des particules de matière plastique alimentées dans l'entonnoir d'introduction (22) avec le liquide dans l'entonnoir d'introduction (22).

2. Dispositif selon la revendication 1, **caractérisé en ce que** l'au moins une buse d'introduction (38) est conçue de manière à former un tourbillon mélangeant les particules de matière plastique alimentées dans l'entonnoir d'introduction (22) avec le liquide dans la région de la sortie (44) de l'entonnoir d'introduction (22).

3. Dispositif selon l'une des revendications 1 ou 2, **caractérisée en ce que** le jet de liquide distribué par l'au moins une buse d'introduction (38) est orienté vers la paroi intérieure de l'entonnoir d'introduction (22), avantageusement sous un angle par rapport à la direction axiale de l'entonnoir d'introduction (22).

4. Dispositif selon l'une des revendications précédentes, **caractérisé en ce qu'**au moins une buse d'introduction (38) est disposée sur le bord (40) de l'entrée de l'entonnoir d'introduction (22).

5. Dispositif selon l'une des revendications précédentes, **caractérisé en ce que** l'orientation de l'au moins une buse d'introduction (38) est réglable.

6. Dispositif selon l'une des revendications précédentes, **caractérisé en ce que** plusieurs buses d'introduction (38) reliées à une arrivée de liquide, par lesquelles le liquide est alimenté dans l'entonnoir d'introduction (22), sont disposées sur l'entonnoir d'introduction (22).

7. Dispositif selon l'une des revendications précédentes, **caractérisé en ce qu'**un jet de liquide orienté directement vers la sortie (44) de l'entonnoir d'introduction (22) est distribué par au moins une buse d'introduction.

8. Dispositif selon l'une des revendications précédentes, **caractérisé en ce qu'**au moins le bord (40) de l'entrée (18) de l'entonnoir d'introduction est de forme elliptique.

9. Dispositif selon l'une des revendications précédentes, **caractérisé en ce que** l'alimentation pour les particules de matière plastique comporte un réservoir d'alimentation (26) contenant les particules de matière plastique tout en étant relié à l'entrée de l'entonnoir d'introduction (22), dans lequel des brosses d'alimentation (30, 32) entraînées de façon rotative, par lesquelles les particules de matière plastique sont alimentées séparément vers l'entrée de l'entonnoir d'introduction (22), sont disposées dans le réservoir d'alimentation (26).

10. Dispositif selon l'une des revendications précédentes, **caractérisé en ce que** celui-ci comporte en outre un système de commande destiné à commander l'alimentation pour les particules de matière plastique et/ou l'arrivée de liquide.

11. Dispositif selon l'une des revendications précédentes, **caractérisé en ce que** celui-ci comporte en outre un système de régulation destiné à commander l'alimentation pour les particules de matière plastique et/ou l'arrivée de liquide sur la base de données de mesure mises à disposition par au moins un dispositif de mesure.

12. Dispositif selon la revendication 11, **caractérisé en ce que** le dispositif de mesure comporte un capteur de niveau de remplissage mesurant le niveau de remplissage dans la sortie (44) de l'entonnoir d'introduction (22).

13. Dispositif de nettoyage (10) destiné à éliminer des impuretés de particules de matière plastique, avec une entrée (18) pour l'introduction conjointe de particules de matière plastique et d'un liquide, comportant un dispositif selon l'une des revendications précédentes.

14. Dispositif de nettoyage (10) selon la revendication 13, **caractérisé en ce que** le dispositif de nettoyage (10) est un raffineur, en particulier un raffineur à disques ou un raffineur à tambour ou conique.

15. Procédé destiné à introduire conjointement des particules de matière plastique et un liquide dans un dispositif de nettoyage (10) destiné à éliminer des impuretés des particules de matière plastique, dans lequel des particules de matière plastique sont alimentées vers l'entrée d'un entonnoir d'introduction (22), dans lequel au moins un jet de liquide est distribué dans l'entonnoir d'introduction (22) par au moins une buse d'introduction (38) reliée à une alimentation en liquide, de manière à produire un mélange des particules de matière plastique alimentées dans l'entonnoir d'introduction (22) avec le liquide dans l'entonnoir d'introduction (22), et dans lequel le mélange des particules de matière plastique et du liquide est alimenté vers une entrée (18) du dispositif de nettoyage (10) par le biais d'une sortie (44) de l'entonnoir d'introduction (22).

16. Procédé selon la revendication 15, **caractérisé en ce qu'**au moins un jet de liquide est distribué dans l'entonnoir d'introduction (22) par l'au moins une buse d'introduction (38), de manière à former un tourbillon mélangeant les particules de matière plastique alimentées vers l'entonnoir d'introduction (22) avec le liquide dans la région de la sortie (44) de l'entonnoir d'introduction (22).

17. Procédé selon l'une des revendications 15 et 16, **caractérisé en ce qu'**un jet de liquide orienté vers la paroi intérieure de l'entonnoir d'introduction (22), avantageusement sous un angle par rapport à la direction axiale de l'entonnoir d'introduction (22), est distribué par l'au moins une buse d'introduction (38).

18. Procédé selon l'une des revendications 15 à 17, **caractérisé en ce qu'**un jet de liquide est distribué respectivement dans l'entonnoir d'introduction (22) par plusieurs buses d'introduction (38) reliées à une arrivée de liquide.

19. Procédé selon l'une des revendications 15 à 18, **caractérisé en ce qu'**un jet de liquide orienté directement vers la sortie (44) de l'entonnoir d'introduction (22) est distribué par au moins une buse d'introduction.

20. Procédé selon l'une des revendications 15 à 19, **caractérisé en ce que** les particules de matière plastique sont alimentées dans l'entonnoir d'introduction (22) à partir d'un réservoir d'alimentation (26) relié à l'entrée de l'entonnoir d'introduction (22) et contenant les particules de matière plastique, dans lequel des brosses d'alimentation (30, 32) entraînées de façon rotative, par lesquelles les particules de matière plastique sont alimentées séparément vers l'entrée de l'entonnoir d'introduction (22), sont disposées dans le réservoir d'alimentation (26).

21. Procédé selon l'une des revendications 15 à 20, **caractérisé en ce que** l'alimentation pour les particules de matière plastique et/ou l'arrivée de liquide de l'au moins une buse d'introduction (38) est/sont commandée(s) sur la base de données de mesure mises à disposition par au moins un dispositif de mesure.

22. Procédé selon la revendication 21, **caractérisé en ce que** le dispositif de mesure détermine le niveau de remplissage dans la sortie (44) de l'entonnoir d'introduction (22).

23. Procédé selon l'une des revendications 15 à 22, **caractérisé en ce que** celui est mis en œuvre avec un dispositif selon l'une des revendications 1 à 14.
